(19) Europäisches Patentamt / European Patent Office / Office européen des brevets

(11) **EP 4 547 029 B1**

(12) **EUROPEAN PATENT SPECIFICATION**

(45) Date of publication and mention
of the grant of the patent:
**04.02.2026 Bulletin 2026/06**

(21) Application number: **23732537.8**

(22) Date of filing: **13.06.2023**

(51) International Patent Classification (IPC):
*A23D 7/005* (2006.01)      *A23D 7/04* (2006.01)
*A23J 1/14* (2006.01)       *A23L 5/10* (2016.01)
*A23L 27/60* (2016.01)      *A23L 27/00* (2016.01)
*A23L 29/00* (2016.01)      *A23L 29/10* (2016.01)
*A23L 35/00* (2016.01)      *A23L 11/00* (2025.01)

(52) Cooperative Patent Classification (CPC):
**A23D 7/0053; A23D 7/02; A23D 7/04; A23J 1/14;
A23J 3/14; A23L 11/00; A23L 27/60; A23L 27/80;
A23L 29/10; A23L 33/185; A23L 35/10**

(86) International application number:
**PCT/EP2023/065824**

(87) International publication number:
**WO 2024/002682 (04.01.2024 Gazette 2024/01)**

(54) **OIL IN WATER EMULSIFIED FOOD COMPOSITION**

EMULGIERTE ÖL-IN-WASSER NAHRUNGSMITTELZUSAMMENSETZUNG

COMPOSITION ALIMENTAIRE ÉMULSIFIÉE HUILE DANS L'EAU

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **30.06.2022 EP 22182252**

(43) Date of publication of application:
**07.05.2025 Bulletin 2025/19**

(73) Proprietor: **Unilever IP Holdings B.V.
6708 WH Wageningen (NL)**

(72) Inventors:
• **SMEEMAN, Emma Maria
6708 WH Wageningen (NL)**
• **VELIKOV, Krassimir Petkov
6708 WH Wageningen (NL)**

(74) Representative: **Keenan, Robert Daniel
Unilever Patent Group
Bronland 14
6708 WH Wageningen (NL)**

(56) References cited:
**WO-A1-2022/049160      US-A1- 2021 051 975
US-A1- 2021 059 284**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to an oil-in-water emulsified food composition comprising aquafaba and a process to prepare the same.

**Background**

Edible oil in water emulsions such as for example salad dressings and mayonnaise are products wherein an oil phase, in the form of small droplets, is dispersed in a continuous water phase. To prevent the oil droplets to coalesce and the oil to separate from the water as a layer of oil, the oil droplets are normally stabilized. This is provided with an oil-in-water emulsifier, which in these products is conventionally egg-derived, in particularly egg yolk.

Consumers increasingly desire products like salad dressing and mayonnaise to be free of egg-derived ingredients or even animal-derived ingredients and prefer a so-called vegan product. For example, emulsifiers based on plant material are known, such as several plant proteins. Examples of such plant-derived emulsifiers are plant protein isolates, such as legume seed proteins. These proteins may come with several inherent disadvantages such as a rough appearance, like a curdled-like, non-smooth, appearance of the emulsion and a sandy mouthfeel. Another emulsifier that is known to prepare a stable oil-in-water emulsion is aquafaba. Aquafaba is the liquid that remains when legumes (*Fabaceae*), such as chickpeas or beans, are boiled in water (aqua). The detailed composition of aquafaba is not well established but contains water, carbohydrates, low molecular weight proteins, saponins, and some Maillard reaction products (He et al., Aquafaba, a new plant-based rheological additive for food applications, Trends in Food Science & Technology 111 (2021) 27-42).

A problem that was observed when preparing oil-in-water emulsified food compositions wherein aquafaba is used as the emulsifier is its poor free-thaw stability. Although mayonnaise-like products and salad dressings are not frozen by default, freezing can readily occur during transportation in cold areas from a factory to the supermarket or to the consumer or during normal use by consumers. For example, due to the location of a dressing, like mayonnaise in the refrigerator close to the cooling element, or due to storage at an outside storage place, or due to the freezing of a food product wherein the dressing is used, like a sandwich. Going through freeze-thaw cycles, especially when this occurs regularly, affects the emulsion and results in separation of the oil from the continuous water phase, resulting in an oil layer.

Classical approaches (see S. Ghosh, J. N. Coupland, Factors affecting the freeze-thaw stability of concentrated emulsions, Food Hydrocolloids 22 (2008) 105-111) of addition of sugars or salt to prevent freezing of the aqueous phase are not suitable as they will modify product taste (e.g. too sweet or too salty) and will compromise the nutrient content of the product (i.e. too high sugar, sodium). Other approaches such as adding polysaccharide (e.g. starch) that increase the viscosity of the nonfrozen aqueous solution in a frozen product, will render the products too thick and unacceptable (B.M. Degner, et al. Factors Influencing the Freeze-Thaw Stability of Emulsion-Based Foods, Comprehensive Reviews in Food Science and Food Safety, 13 (2014), 98-113). Addition of other plant proteins typically bring a rough appearance, like a curdled-like, non-smooth, appearance of the emulsion and a sandy mouthfeel due to their lower solubility. Some mayonnaise compositions comprising aquafaba are known in WO 2022/049160 A1 and US 2021/059284 A1.

There is clearly a desire therefore, to develop aquafaba-based oil-in-water emulsions with an increased tolerance for freeze-thaw cycles. Surprisingly, this problem could be solved by a process and a product of the present invention, that involve aquafaba at a level that is relatively high, expressed as its protein content, preferably in a specific weight ratio to the oil content.

Accordingly, in a first aspect, the present invention relates to an oil-in-water emulsified food composition comprising:

- From 66 to 82 wt% of vegetable oil,
- From 0.53 to 1.3 wt% of aquafaba, calculated as its protein weight, on weight of the composition, wherein the weight ratio of aquafaba, calculated as its protein content, to vegetable oil is at most 1:51.
- Water.

wherein the pH of the composition of from 2.5 to 6.5, preferably of from 2.5 to 5.5.

In a further aspect, the invention relates to a process to prepare an oil-in-water emulsified food composition, wherein the process comprises the steps of:

a) Providing a water phase including the step of mixing

- water and
- from 0.53 to 1.3 wt% of aquafaba, calculated as its protein weight, on weight of the resulting food composition,

b) Combining the water phase with from 66 to 82 wt% of vegetable oil, based on wt of the resulting product,

c) Mixing the combination resulting from step b) to obtain an emulsified oil-in-water emulsion, wherein the weight ratio of aquafaba, calculated as its protein content, to vegetable oil is at most 1:51, in the resulting food composition.

In a further aspect, the present invention relates to the use of from 0.53 to 1.3 wt% of aquafaba (calculated as its protein weight), on wt. of the composition, wherein the composition is an oil in water emulsified food composition further comprising:

• from 66 to 82 wt% of vegetable oil,
• water

wherein the weight ratio of aquafaba, calculated as its protein content, to vegetable oil is at most 1:51, and wherein the composition has a pH of from 2.5 to 6.5, preferably of from 2.5 to 5.5, to provide freeze-thaw stability to the food composition.

**Detailed description of the invention**

All percentages, unless otherwise stated, refer to the percentage by weight (wt%).

"Weight ratio" means that the concentration (wt%) of a first (class of) compound(s) is divided by the concentration (wt%) of a second (class of) compound(s) and multiplied by 100 in order to arrive at a percentage.

"Spoonable" means that a composition is semi-solid but not free-flowing on a time scale typical for eating a meal, meaning not free-flowing within a period of an hour. A sample of such substance can be dipped with a spoon from a container containing the composition. Except in the operating and comparative examples, or where otherwise explicitly indicated, all numbers in this description indicating amounts or ratios of material or conditions of reaction, physical properties of materials and/or use are to be understood as modified by the word "about".

Features described in the context of one aspect of the invention can be applied in another aspect of the invention.

Emulsion

The product of the first aspect of the invention is an emulsified food composition. Examples of oil-in-water emulsions encompassed by the present invention include emulsified sauces, such as mayonnaise, mayonnaise-like emulsions and salad dressings. Preferably, the food composition is a mayonnaise, a mayonnaise-like product, such as a low-oil mayonnaise, or a salad dressing, and most preferably a mayonnaise or mayonnaise-like product, or other emulsified dip or sauce, most preferably a mayonnaise.

Mayonnaise is generally known as a thick, creamy sauce that can be used as a condiment with other foods. Mayonnaise is a stable water-continuous emulsion of typically vegetable oil, egg yolk and either vinegar or lemon juice. In many countries the term mayonnaise may only be used in case the emulsion conforms to the "standard of identity", which defines the composition of a mayonnaise. For example, the standard of identity may define a minimum oil level, and a minimum egg yolk amount. Also, mayonnaise-like products having e.g. oil levels lower than defined in a standard of identity or not containing egg yolk are in the scope of the present invention. In the art, this kind of products may contain thickeners like starch to stabilise the aqueous phase. Mayonnaises and mayonnaise-like products may vary in colour, and are generally white, cream-coloured, or pale yellow. The texture may range from light creamy to thick. Generally, mayonnaise and mayonnaise-like products are spoonable. Mayonnaises in the context of the present invention do not necessarily need to conform to a standard of identity in any country. Salad dressings are known in the art and may have a lower viscosity than mayonnaise or mayonnaise-like products and they may include e.g. emulsified products known in the market as 'dips' or 'variety sauces', *etc.*

Oil

Emulsified food compositions comprises an emulsified oil phase that is present in the form of oil droplets in a continuous water phase.

The oil is vegetable oil. Preferably the total vegetable oil is liquid preferably at 20 °C, more preferably at 5°C. Preferably, vegetable oil comprises, preferably consists of vegetable oils which are liquid preferably at 20 °C, more preferably at 5°C. Preferably the oil comprises an oil selected from the group consisting of sunflower oil, rapeseed oil, olive oil, soybean oil, and combinations of these oils. More preferably, the oil is an oil selected from the group consisting of sunflower oil, rapeseed oil, olive oil, soybean oil, and combinations of these oils. Most preferred, the oil is soybean oil or rapeseed oil. The amount of vegetable oil used in the present invention is from 66 to 82 wt%, preferably of from 68 to 80 wt%, even more preferably of from 69 to 80 wt%, based on the weight of the resulting food composition.

Water

The total water in the food composition comprises water that is added as water as such, and water that is part of other ingredients, such as vinegar. The total water level in the food composition is preferably of from 16 to 34 wt%, more preferably of from 18 to 33 wt%, based on the weight of the composition.

Acidulant

Acidulant is preferably present in the food composition in the form of vinegar Acidulant is preferably added in an amount to achieve a preferred pH of the resulting food composition of from 2.5 to 6.5, preferably from 2.5 to 5.5, more preferably from 2.5 to 4.8, even more preferably 3 to 4.6. The composition preferably comprises vinegar. In case the acidulant is vinegar, the vinegar is preferably present in the composition in an amount of from 0.5 to 10 wt%, preferably 1 to 5 wt%, based on the weight of the formulation, and added in this amount to the water phase during preparation.

Emulsifier

An emulsifier is required in the invention, to emulsify the oil droplets in the continuous water phase of the resulting food composition and prevent them from coalescing into an oil layer. Traditionally, the emulsifier in mayonnaise is egg or egg yolk. Increasingly, consumers prefer dressing compositions such as mayonnaise or mayonnaise-like products that are free from animal derived products. The oil-in-water-emulsified products therefore preferably are free from egg-derived emulsifier, preferably are free from animal derived ingredients. It is preferred that the food composition is free from egg yolk or dairy protein, even more preferably is free from egg yolk.

Plant-based oil-in-water emulsions have been described. In such compositions a plant protein is responsible for the emulsifying activity. One problem that is associated with several plant proteins when used as emulsifier is that they provide a powdery, rough mouthfeel to the resulting emulsion. Other plant proteins provide textural complications, sometimes resembling cottage cheese, especially at higher oil levels. It is therefore desired to provide an oil-in-water emulsion that has a smooth texture and a non-rough mouthfeel. In the present invention, aquafaba is the emulsifier. Preferably the composition is free from non-mustard plant protein that does not originate from the aquafaba.

Aquafaba is an emulsifier and the application in mayonnaise-like dressing products of chickpea-derived aquafaba is known. Aquafaba is the liquid that remains after heating, e.g. at more than 70°C, preferably more than 80 °C, normally cooking, of legume seeds in water. It was observed by the inventors, that use of such cooking liquid to stabilize (in particular relatively high oil) oil-in-water emulsions results however in an emulsified food product with poor freeze-thaw stability. This problem was surprisingly overcome using aquafaba in an amount of from 0.53 to 1.3 wt% (based on weight of its protein, and preferably a weight ratio of protein to oil of at most 1:51, preferably of 1:55 to 1:155, more preferably 1:68 to 1:125. The aquafaba is preferably added as powder or as concentrated liquid. It is more preferably added in the form of a powder. As the skilled person will understand, at relatively high oil levels within the claimed range, the use of dry aquafaba may become more preferred, in view of available formulation space.

The amount of aquafaba, based on its protein content, can be established by a person skilled in the art by checking the protein content of the aquafaba provided by the supplier. It can conveniently be measured by methodology known in the art, such as the Kjeldahl method, on the basis of its nitrogen content. Kjeldahl-measured nitrogen content is multiplied with a factor 6.25 to arrive at the protein content, as known in the art.

To the best knowledge of the inventors, despite the rising popularity of aquafaba as an emulsifier in mayonnaise, an oil-in-water emulsion emulsified with aquafaba and resembling the viscosity and stability of egg-emulsified emulsions and showing good freeze-thaw stability does not exist and could not be made up to now. Freeze-thaw stability is defined in that the composition is stable, no oil separation, after a cycle of cooling to a temperature at which at least one of the two (aqueous or oil) phases is frozen and allowing to go back to a temperature at which the phase(s) are melted again. A number of different physicochemical processes may occur when an oil-in-water emulsion is cooled till one of the two phases crystalisze: fat crystallization, ice crystallization, coalescence, and phase separation (B.M. Degner, et al. Factors Influencing the Freeze-Thaw Stability of Emulsion-Based Foods, Comprehensive Reviews in Food Science and Food Safety, 13 (2014), 98-113). An example of a freeze-thaw stability test is a cycle of cooling to -18 °C for 24h, where both oil and aqueous phase crystallize, and allowing to gain a temperature of RT (20 °C) again over 8h. Preferably the emulsified composition is stable (i.e. no observation of macroscopic phase separation is observed) after 1 cycle, more preferably 2 cycles even more preferably after 3 cycles of freeze-thawing.

Aquafaba as preferred in the invention is typically aquafaba in powder form. Dry aquafaba, powdered aquafaba, may typically have a water level of below 20 wt% (e.g. of from 0.1 to 20 wt%), preferably below 12 wt% (e.g. of from 0.1 to 12 wt%), more preferably below 6 wt% (e.g. of from 0.1 to 6 wt%), based on the weight of the dry aquafaba (the aquafaba powder).

The aquafaba that is used in the present invention is preferably pulse seed aquafaba, preferably in dry form. It is preferably selected from the group consisting of dry chickpea aquafaba, dry white bean aquafaba, dry pea aquafaba, dry lentil aquafaba, dry soybean aquafaba, dry kidney bean aquafaba, dry black bean aquafaba and mixtures thereof. More preferably, the aquafaba powder is dry chickpea aquafaba or dry white bean aquafaba. Most preferably, the aquafaba powder is dry chickpea aquafaba.

Dry aquafaba typically comprises protein in an amount of from 15 to 25 wt%.

Preferably of from 18 to 24 wt%. Preferably more than 90wt%, even more preferably more than 95wt%, even more preferably all protein in the food composition originates from the aquafaba. It is preferred that more than 90 wt%, even more preferably more than 95 wt%, even more preferably more than 99 wt%, and even more preferably all non-mustard protein in the food composition is protein from legumes, preferably is selected from the group consisting of chickpea protein, white bean protein, lentil protein, soya bean protein, black bean protein, and mixtures therefore, more preferably from chickpea protein or white bean protein, most preferably chickpea protein.

Aquafaba as used in the present invention can suitably be produced by a person skilled in the art. The legumes are heated at a temperature of from 60 to 160°C, preferably boiled, e.g. for a period of from 2 minutes to 20 hours, and separated from the cooking liquid. It can be preferred that the legumes are heated in water at 70 to 160°C for 15 minutes to 20 hours, preferably at 80 to 130°C for 30 minutes to 10 hours, preferably from 30 minutes to 5 hours. The skilled person will understand that lower temperatures require a higher time period and vice versa. The resulting liquid is then concentrated to achieve the required legume protein content, or the concentrate may be dried to obtain dry aquafaba powder. This can be done for example by air drying or spray drying, as known in the art. The process of the invention may comprise the step of preparing the aquafaba solution or powder with the required level of aquafaba based on legume protein content, wherein this step comprises heating legumes in water, preferably chickpea or white beans, separating them from the cooking liquid, and concentrating or even drying the liquid to obtain concentrated aquafaba with preferably a protein content of between 2.2 and 17.5 wt%, or to obtain dry aquafaba. Liquid aquafaba may be concentrated for example to a legume protein content of between 2.2 and 17.5 wt%. Liquid aquafaba can be obtained from commercial suppliers such as for example Sesajal (Mexico), Dohler (Germany) or Veggò (Italy). Aquafaba in dry form can easily be supplied from commercial manufacturers like for example Döhler (Germany) or VOR (USA) as known to the artisan.

EP3788885 relates to aquafaba compositions and methods of manufacture. Among examples relating to cake-baking and merengue preparation, a mayonnaise is exemplified that uses aquafaba in powder form. The mayonnaise composition exemplified in EP3788885 share with other emulsified compositions that are prepared from conventional liquid aquafaba that they have poor freeze-thaw stability. This problem has been surprisingly overcome by the use of aquafaba in the claimed amount, calculated based on its protein content, and the aquafaba to oil ratio. According to the present invention, the aquafaba is used in an amount of from 0.53 to 1.3 wt%, preferably from 0.53 to 1.2 wt%, calculated as the protein content in the aquafaba, based on the weight of the food composition, and is preferably used in dry form. Preferably, the amount is from 0.58 to 1.1 wt%, even more preferably of from 0.65 to 1.0 wt%, calculated as the protein content in the aquafaba, on weight of the food composition.

If aquafaba is used in dry form, the aquafaba (the powder) is preferably present in an amount of from 2.1 to 8.0 wt%, preferably of from 2.3 to 7.3 wt%, even more preferably of from 2.6 to 6.7 wt%, based on the weight of the food composition.

As indicated above, the aquafaba is preferably derived from a legume selected from the group consisting of chickpea, white bean, pea, lentil, soybean, kidney bean, aquafaba, black bean and mixtures thereof, more preferably, from chickpea, white bean and most preferably, the aquafaba powder is derived from chickpea. Accordingly, the amounts of aquafaba as calculated on weight of protein of aquafaba are preferably the total weight of legume protein, preferably the total weight of protein selected from the group consisting of chickpea, white bean, pea, lentil, soybean, kidney bean, aquafaba, black bean and mixtures thereof, and is more preferably the total weight of protein from chickpea, white bean and most preferably, the total weight of protein from chickpea, based on the weight of the composition.

The composition preferably comprises from 0.53 to 1.3 wt%, preferably 0.53 to 1.2 wt%, more preferably from 0.58 to 1.1 wt%, even more preferably from 0.65 to 1.0 wt%, based on the weight of the food composition, protein, preferably legume protein.

It proved in particular advantageous if the ratio of protein, typically legume protein, to vegetable oil is 1:51 or less, preferably from 1:55 to 1:155, preferably 1:68 to 1:125.

The composition of the invention is preferably a plant based, and most preferably a vegan composition. Accordingly, the composition of the invention is preferably free from egg or egg-derived ingredients. More preferably, the composition is free from egg yolk. Preferably the composition is free from dairy protein. The composition comprises preferably below 0.05 wt%, even more preferably of below 0.01 wt% of water-insoluble plant protein and is preferably free from water-insoluble plant protein, for optimal mouthfeel.

Other ingredients

The composition of the invention is preferably free of hydrocolloid thickening agents, such as for example starch or gum. The concentration of starch, preferably of non-emulsifying starch, is preferably less than 2 wt%, preferably of below 1.5 wt%, even more preferably of below 1.0 wt%, more preferably below 0.1 wt%, and most preferably is 0 wt%. A preferred range is from 0 to 2 wt%, more preferably of from 0.1 to 2 wt%, or even of from 0.1 to 1.5 wt%, The composition is preferably free from modified starch. The composition is preferably free from waxy starch. These levels are in particular preferred for compositions with from 66 to 72 wt% of vegetable oil, as the skilled person will understand.

Starch derived from potato, corn, rice, or tapioca is preferably less than 3 wt%, preferably of below 1 wt%, more preferably below 0.1 wt%, and most preferably is 0 wt%.

Starch other than Fabaceae starch is preferably less than 3 wt%, preferably of below 1 wt%, more preferably below 0.1 wt%, and most preferably is 0 wt%. Starch other than from chickpea, white bean, soybean, black bean, faba bean, pea is preferably less than 3 wt%, preferably of below 1 wt%, more preferably below 0.1 wt%, and most preferably is 0 wt%. Starch other than chickpea starch, white bean starch is preferably less than 3 wt%, preferably of below 1 wt%, more preferably below 0.1 wt%, and most preferably is 0 wt%. Starch other than chickpea starch is preferably less than 3 wt%, preferably of below 1 wt%, more preferably below 0.1 wt%, and most preferably is 0 wt%.

Gum is preferably below 0.05 wt%, more preferably is 0 wt%. Non-fabacean gum is preferably below 0.05 wt%, more preferably is 0 wt%. The total amount xanthan gum, locust bean gum, guar gum, carrageenan gum and konjac mannan is preferably below 0.05 wt%, more preferably is 0 wt%. Xanthan gum is preferably below 0.05, more preferably is absent. The effect of the present invention is predominantly apparent in compositions with low starch or gum, preferably where these ingredients are absent, as thickeners are not desired. Modified emulsifying starch, like OSA (octenyl succinic anhydride modified) starch may be present and is excluded from "starch" in this paragraph, as the skilled person understands.

The composition may suitably contain one or more additional ingredients which are common to mayonnaise-type emulsions. Examples of such optional ingredients include salt, spices, sugars, and herbs. Such optional additives, when used, collectively do not make up more than 34 wt%, more preferably not more than 18 wt% of the emulsified food product.

The composition of the invention may comprise sugar, but high levels are not desired. Sugar may be present to an amount of from 0.1 to 15 wt%, preferably of from 0.3 to 6 wt%, even more preferably of from 0.4 to 5 wt%, most preferably of from 0.5 to 4 wt%, based on the weight of the composition.

Total alkaline metal salt, for example sodium chloride, may be present to an extent of from 0.1 to 5 wt%, preferably from 0.15 to 4 wt%, or more preferably of from 0.2 to 3 wt%, based on the weight of the composition.

It may be preferred that sugar, salt or both are present in the composition. The composition may comprise mustard.

pH and acidulant

The composition of the invention has preferably a pH ranging from 2.5 to 6.5. A pH range of from 2.5 to 5.5, preferably from 2.5 to 4.8, preferably from 3 to 4.6 can be preferred for more acidic compositions.

The total amount of acid in the composition can be determined by titration with sodium hydroxide (NaOH), and expressed as titratable acidity. This is called the titratable acidity, expressed as acetic acid (HAc), which is determined using the following formula.

$$HAc\% = 100\% \cdot (V \cdot t \cdot M)/m \qquad (1)$$

wherein:

V:  volume NaOH solution added (mL)
t:  concentration NaOH solution (mol/L)
M:  molecular weight HAc (60.052 g/mol)
m:  mass (g) product which has been titrated

The composition preferably comprises an acidulant. Preferably the composition comprises organic acid. More preferably, the acid is organic acid. Preferably, the composition comprises an acidulant selected from the group consisting of acetic acid, citric acid, and mixtures thereof.

Preferably the composition of the invention has a total titratable acidity ranging from 0.03% to 3% by weight expressed as acetic acid, preferably from 0.05% to 2% by weight, preferably from 0.1% to 1% by weight. Most preferably the composition comprises acetic acid. Acetic acid is preferably present in an amount of more than 50 wt%, more preferably more than 80 wt%, even more preferably more than 90 wt%, even more preferably more than 95 wt% based on the weight of the total amount of acid in the composition.

The acids as described in this specification include their corresponding salts which are in equilibrium with the acids (acetates, citrates). In case a concentration of an acid is provided, then this concentration refers to total concentration of the acid and its corresponding salt.

Acidulant is preferably added during preparation of the food composition in the form of vinegar Acidulant is preferably added in an amount to achieve a preferred pH of the resulting food composition of from 2.5 to 6.5, more preferably of from 2.5 to 5.5, preferably from 2.5 to 4.8, preferably 3 to 4.6. The composition preferably comprises vinegar.

Physical specificities

The average oil droplet size D3.3 is preferably below 50 microns, and more preferably below 10 micron, preferably from 0.2 to 10 micrometers, more preferably of between 6 and 10 micrometers, as known in the art, see M. Alderliesten, Particle & Particle Systems Characterization 8 (1991) 237-241; for definitions of average diameters. Below 10 microns is conventional in industrially prepared mayonnaise compositions. This mean diameter may suitably be determined using the method described by Goudappel et al. (Journal of Colloid and Interface Science 239, p. 535-542, 2001).

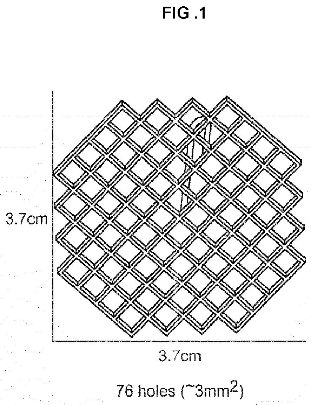

The composition preferably has a hardness (as expressed in Stevens value, in grams) that resembles the hardness of a full-fat (78wt% oil) mayonnaise composition. The composition is preferably stable upon storage of at least a month, preferably at least 2, 4 or even 6 months, *e.g.* 1 to 24 months, preferably 2 to 12 months, more preferably 2 to 8 months. The Stevens Value (in grams) is preferably of between 50g and 350g, preferably between 80g and 300g, even more preferably between 80 and 275g, and even more preferably from 90 to 270, as measured at 20 °C. The Stevens value (in grams) is preferably in the same order of magnitude as observed for an equivalent composition with a high oil level (e.g. 75 wt% or even 80 wt%). The Stevens value is measured as known in the art, using an apparatus as depicted in Figure 1.

**Process**

The composition of the invention can suitably be prepared using a process according to the second aspect of the invention. The process comprises the steps of:

a) Providing a water phase including the step of mixing

- water and

- from 0.53 to 1.3 wt% of aquafaba, calculated as its protein weight, on wt. of the resulting food composition,

b) Combining the water phase with from 66 to 82 wt% of vegetable oil, based on weight of the resulting food product, c) Homogenizing the combination resulting from step b) to obtain an oil-in-water emulsified food composition, wherein the weight ratio of aquafaba, calculated as its protein content, to vegetable oil is at most 1:51, in the resulting food composition.

Step a

In step a) a water phase is prepared. The water phase forms the continuous phase in the resulting oil in water emulsion. The water phase comprises water. Preparation of the water phase includes the step of mixing water with aquafaba. The amount of aquafaba is from 0.53 to 1.3 wt%, preferably of from 0.58 to 1.1 wt%, even more preferably of from 0.65 to 1.0 wt%. The amount is calculated as its protein weight, on wt. of the resulting food composition. The aquafaba can be added in powder form or can be in liquid form. When in liquid form, the aquafaba can suitably be produced by preparing aquafaba with a relatively high concentration of protein, which may involve a concentration step. It may be preferred, that the aquafaba with a relatively high concentration of protein provides for the water in the water phase.

If the aquafaba is added in dry form, the amount of aquafaba powder added into the water phase is preferably of from 2.1 to 8.0 wt%, preferably of from 2.3 to 7.3 wt%, even more preferably of from 2.6 to 6.7 wt%, based on the weight of the resulting food composition. The amount of powder added into the water phase is preferably of from 6 to 50 wt%, preferably of from 6.6 to 45.6 wt%, even more preferably of from 7.4 to 41.9 wt%, based on the weight of the water phase.

The amount of aquafaba, preferably added in powder form, is from 2.2 to 17.5 wt%, preferably of from 2.5 to 7 wt%, even more preferably of from 3 to 7 wt%, calculated as its protein weight, on wt. of the water in the water phase. (wt. protein / (wt protein + wt water).

The water phase further comprises acidulant. The acidulant is preferably added in an amount to provide a pH of the resulting food composition of between 2.5 and 6.5. It can be preferred for more acidic compositions that the pH is preferably of from 2.5 and 5.5, preferably from 2.5 to 4.8, preferably from 3 to 4.6. Preferably the acidulant is added in the water phase in an amount to provide that the resulting food composition has a total titratable acidity ranging from 0.03% to 3% by weight expressed as acetic acid, preferably from 0.05% to 2% by weight, preferably from 0.1% to 1% by weight.

Acetic acid is preferably added to achieve a total titratable acidity ranging from 0.03% to 3% by weight expressed as acetic acid, preferably from 0.05% to 2% by weight, preferably from 0.1% to 1% by weight.

This can typically be done by using vinegar.

The ingredients in the water phase are typically mixed, as known in the art, using for example a paddle mixer.

The amount of water phase that is added in step a) preferably is from 16 to 34 wt%, preferably of from 18 to 33 wt%, based on the weight of the resulting food composition.

Step b.

In step b) of the process, the water phase resulting from step a) is combined with from 66 to 82 wt% of vegetable oil, based on weight of the resulting food product. Preferably, the oil level is from 68 to 80 wt%, even more preferably of from 70 to 80 wt%, based on the weight of the resulting food composition.

The ratio of aquafaba, calculated as its protein content, to vegetable oil in the resulting composition, is preferably at most 1:51, preferably of from 1:55 to 1:155, preferably 1:68 to 1:125. The ratio of legume protein to vegetable oil in the resulting composition is preferably at most 1:51, preferably of from 1:55 to 1:155, preferably 1:68 to 1:125.

Step c.

In step c) of the process, the combination resulting from step b) is mixed to result in an oil in water emulsified food composition. Homogenisation is suitably carried out with a device that provides high shear, such as a rotor stator device or a colloid mill, as known in the art. This results in the preferred average oil droplet size D3,3 of below 50 micron and more preferably of below 14 micron, even more preferably of between 0.2 to 12 micrometers, more preferably of between 1 and 10 micrometers, most preferably between 6 and 10 micron.

The present invention relates furthermore to a composition that is obtainable by, preferably that is obtained by the process of the invention.

Use

In a further aspect, the present invention relates to the use of from 0.53 to 1.3 wt% of aquafaba (calculated as its protein weight), on wt. of a water-in-oil-emulsified food composition, wherein the composition comprises:

- from 66 to 82 wt% of vegetable oil,
- water,

  wherein the weight ratio of aquafaba, calculated as its protein content, to vegetable oil is at most 1:51,
  and wherein the composition has a pH of from 2.5 to 6.5,
  to provide freeze-thaw stability to the emulsified food composition.

It was surprisingly found that with the use of aquafaba according to the invention, i.e. 0.53 to 1.3 wt% of aquafaba (calculated as its protein weight), on wt. of an oil-in-water emulsified food composition, and a aquafaba to oil ratio of at most 1:51, the freeze-thaw stability of oil in water emulsified food compositions did significantly improve compared to an equivalent composition with an aquafaba level (expressed as its protein content) that is lower than presently claimed and a higher aquafaba to oil ratio, e.g. when using liquid aquafaba the way it is used in the art. Freeze-thaw stability is defined here in that the composition is stable, no visible oil separation, after a cycle of cooling to -18 °C for 24 h, and allowing to gain a temperature of 20 °C again during a period of 8 hours. A stability assessment is carried out directly after the cycle. Preferably, the emulsified composition is stable after 1 cycle, more preferably 2 cycles even more preferably after 3 cycles of freeze-thawing.

**Methods**

*Thickness - Stevens value:* the Stevens value is determined at 20°C by using a Stevens LFRA Texture Analyser (ex Brookfield Viscometers Ltd., UK) with a maximum load/measuring range of 1000 grams, and applying a penetration test of 25mm using a grid, at 2mm per second penetration rate, in a cup having a diameter of 65mm, that contains the emulsion; wherein the grid comprises square openings of approximately 3x3mm, is made up of wire with a thickness of approximately 1mm, and has a diameter of 40mm. One end of a shaft is connected to the probe of the texture analyser, while the other end is connected to the middle of the grid. The grid is positioned on the flat upper surface of the emulsion in the cup. Upon starting the penetration test, the grid is slowly pushed downward into the emulsion by the texture analyser. The final force exerted on the probe is recorded, giving the Stevens value in gram. A drawing of the grid is given in Figure 1. The grid is made from stainless steel, and has 76 holes, each hole having a surface area of approximately 3x3 mm.

*Protein concentration.* The protein content was determined on the basis of total nitrogen content. Kjeldahl method was applied to determine nitrogen content (Kjeldahl, ISO 937 modified). Nitrogen content was then multiplied by a factor 6.25 to arrive at protein content.

The composition is now exemplified with the following non-limiting examples:

Examples

Raw Materials

Soybean oil: ex Cargill (Amsterdam, The Netherlands)
Dried Aquafaba: dry chickpea aquafaba ex Döhler (Darmstadt, Germany)
Liquid Aquafaba: liquid chickpea aquafaba ex Sesajal (San Diego, United States)
Vinegar: 12% Branntweinessig ex Carl Kuhne (Hamburg, Germany)

Example 1

Samples

|  | Comp Ex. 1 (wt%) | Comp. Ex. 2 (wt%) | Example 3 (wt%) | Example 4 (wt%) |
|---|---|---|---|---|
| Oil | 70 | 70 | 70 | 70 |
| Vinegar | 3.5 | 2.5 | 2.5 | 2.5 |
| Aquafaba powder | - | 2.3 | 3.3 | 4.6 |
| Liquid aquafaba | 21 | - | - | - |
| water | rest | rest | rest | rest |
| Total | 100 | 100 | 100 | 100 |
| pH | ± 3.5 | ± 3.9 | ± 4.05 | ± 4.2 |
| Aquafaba Protein* | 0.50 | 0.50 | 0.72 | 1.0 |
| *Amount of Aquafaba protein provided by either aquafaba powder or liquid aquafaba | | | | |

Method

4 samples were prepared for each aquafaba powder concentration (2.3, 3.3, 4.6 wt%). Samples using aquafaba powder were prepared as follows: a water phase was prepared by mixing the water, the, the aquafaba powder. The water phase was combined with the oil and was homogenized with a colloid mill (Ross Mill, 8000 rpm) and the resulting mixture was acidified to the desired pH level using vinegar. The sample using liquid aquafaba was made in the same manner, but liquid aquafaba was used instead of aquafaba powder. The samples were subjected to 3 temperature cycles. The temperature was kept at 5 °C or at -18 °C. The samples were cooled or frozen for 24 h, allowed to warm to room temperature during a period of 8 hours, this was repeated 3 times (in total 3 cycles). The instability of the emulsion was judged by the presence of an oil layer on the emulsion, indicating that the water phase and oil phase had been separated and the emulsion was destroyed.

Results

Table 1 Stability of emulsion with different concentration of aquafaba based on protein content after 1, 2 and 3 freeze-thaw cycles of -18 °C.

| # | % protein | Reference | cycle 1 | cycle 2 | cycle 3 |
|---|---|---|---|---|---|
| Comp. ex.1.1 (liquid AqF) | 0.50% | stable | instable | instable | instable |
| Comp. Ex. 1.2 | 0.50% | stable | instable | instable | instable |
| Ex. 1.3 | 0.72% | stable | stable | stable | instable |
| Ex. 1.4 | 1.0% | stable | stable | stable | stable |
| "Stable" means: No visible emulsion breakage, e.g. no oil on top, no water on bottom and visible cracks in the mayonnaise structure. | | | | | |

"Instable" means: Visible emulsion breakage, e.g. oil on top, water on bottom and visible cracks in the mayonnaise structure.

Example 1.3 and 1.4 with an aquafaba level based on protein content of more than 0.53wt% showed freeze-thaw stability after three cycles of freezing at -18°C. Control samples that were cooled till 5 °C instead of -18°C remained stable (not shown). Comparative examples 1.1 and 1.2 with an aquafaba content based on protein level of less than 0.53 wt% were not stable after freeze-thaw procedures.

Example 2

Example 2 exemplifies compositions over the range of aquafaba Samples were prepared according to Example 1 above. The oil level was 72%.

| # | % protein | Stevens (g) | Qualitative texture assessment |
|---|---|---|---|
| Comp. ex.2.1 (liquid AqF) | 0.50% | ca. 115 | Texture is good. Similar to commercial Hellman's vegan mayonnaise. No syneresis. |
| Comp. Ex. 2.2 | 0.50% | ca. 126 | Texture is good. Similar to commercial Hellman's vegan mayonnaise. No syneresis. |
| Ex. 2.3 | 0.72% | ca. 182 | Texture is good. Similar to commercial Hellman's mayonnaise. No syneresis. |
| Ex. 2.4 | 1.0% | ca. 260 | Thick texture. No syneresis. |
| Ex. 2.5 | 1.2% | ca. 325 | Very thick texture. No syneresis |
| Comp. ex.2.6 | 1.4% | >350 | Too thick, not acceptable. No syneresis |

Conclusion

The samples exemplify that better freeze-thaw stability is observed for samples with a higher aquafaba level (expressed as its protein content). The use of known liquid aquafaba appeared not feasible in high-oil compositions, from a formulation perspective. Indeed, to the best knowledge of the inventors, freeze-thaw stable aquafaba-emulsified compositions do not exist on the market.

With the use of aquafaba in amounts as claimed (0.53 to 1.3 wt%, based on protein level), and a protein to oil ratio of at most 1:51, compositions could be prepared that were much more stable against freeze-thaw cycles. Composition with more than 1.3% aquafaba appeared with too thick texture. To the best knowledge of the inventors, the use of aquafaba according to the invention to secure the freeze-thaw resistance in high oil oil-in-water emulsions is not known.

**Claims**

1. An oil-in-water emulsified food composition comprising:

   • From 66 to 82 wt% of vegetable oil,
   • From 0.53 to 1.3 wt% of aquafaba, calculated as its legume protein weight, on weight of the food composition, wherein the weight ratio of aquafaba, calculated as its protein content, to vegetable oil is at most 1:51,
   • Water,

wherein the pH of the composition of from 2.5 to 6.5, preferably from 2.5 to 5.5.

2. The oil-in-water emulsified food composition according to claim 1, wherein the aquafaba is present in an amount of from 0.53 to 1.2 wt%, preferably in an amount is from 0.58 to 1.1 wt%, even more preferably of from 0.65 to 1.0 wt%, calculated as the protein content in the aquafaba, on weight of the food composition.

3. The oil-in-water emulsified food composition according to any one of the preceding claims, wherein the aquafaba is selected from the group consisting of chickpea aquafaba, white bean aquafaba, pea aquafaba, lentil aquafaba, soybean aquafaba, kidney bean aquafaba, black bean aquafaba or a mixture thereof, preferably wherein the aquafaba is selected from the group consisting of chickpea aquafaba and white bean aquafaba.

4. The oil-in water emulsified food composition according to any one of the preceding claims, wherein the weight ratio of aquafaba, calculated as weight of its protein, to vegetable oil is from 1:55 to 1:155, preferably 1:68 to 1:125.

5. The oil-in water emulsified food composition according to any one of the preceding claims, wherein the concentration of starch from potato, corn, rice, tapioca or pea is less than 3 wt%, preferably less than 1 wt%, preferably is absent.

6. The oil-in water emulsified food composition according to any one of the preceding claims, wherein the average oil droplet size D3,3 is below 10 micron, preferably between 1 and 10 micron.

7. The oil-in water emulsified food composition according to any one of the preceding claims, wherein the composition is a mayonnaise, a mayonnaise-like sauce, or a salad dressing or a dip sauce.

8. A process to prepare an oil-in-water emulsified food composition, wherein the process comprises the steps of:

    a. Providing mixture comprising water, and from 0.53 to 1.3 wt% of aquafaba, calculated as its legume protein weight, on wt. of the resulting food composition,
    b. Combining the mixture resulting from step a) with from 66 to 82 wt% of vegetable oil, based on weight of the resulting food composition,
    c. Homogenizing the combination resulting from step b) to obtain an emulsified oil-in-water emulsion with a pH of from 2.5 to 6.5, wherein the weight ratio of aquafaba, calculated as its protein content, to vegetable oil is at most 1:51, in the resulting food composition.

9. The process according to claim 8, wherein the aquafaba is added as powder and the powder has a protein content of from 15 to 25 wt% based on the weight of the powder.

10. Process according to claim 8 or 9, wherein the mixture resulting from step a) comprises aquafaba in an amount of from 2.2 to 17.5 wt%, preferably of from 2.5 to 7 wt%, even more preferably of from 3 to 7 wt%, calculated as its protein weight, based on the weight of the mixture resulting from step a).

11. Process according to any one of claims 8 to 10 wherein the weight ratio of aquafaba, calculated as its protein content, to vegetable oil in the resulting composition is from 1:55 to 1:155, preferably 1:68 to 1:125 wt%.

12. Process according to any one of claims 8 to 11, wherein the process further comprises the step of providing aquafaba, carried out before step a), the step comprising heating seeds of *Fabaceae* in water to a temperature of between 60 and 160 °C, and removing the seeds from the resulting aquafaba, and concentrating or drying the aquafaba, wherein the resulting aquafaba has a protein content of from 2.2 to 25 wt% on dry weight.

13. Process according to any one of claims 8 to 12, wherein the homogenisation in step c) is carried out to obtain an average particle size D3,3 of below 10 micron, preferably of between 1 and 10 micron.

14. Use of from 0.53 to 1.3 wt% of aquafaba powder (weight calculated as its protein weight), on weight of the composition, wherein the composition is an oil in water emulsified food composition comprising:

    • from 66 to 82 wt% of vegetable oil,
    • water,
    wherein the weight ratio of aquafaba, calculated as its protein content, to vegetable oil is at most 1:51,
    and wherein the composition has a pH of from 2.5 to 6.5, preferably of from 2.5 to 5.5, to provide freeze-thaw stability to the food composition.

**Patentansprüche**

1. Emulgierte Öl-in-Wasser-Nahrungsmittelzusammensetzung, umfassend:

   • 66 bis 82 Gew.-% Pflanzenöl,
   • 0,53 bis 1,3 Gew.-% Aquafaba, berechnet als Gewicht seines Hülsenfrüchteproteins, bezogen auf das Gewicht der Nahrungsmittelzusammensetzung,
   wobei das Gewichtsverhältnis von Aquafaba, berechnet als dessen Proteingehalt, zu Pflanzenöl höchstens 1:51 beträgt,
   • Wasser.

   wobei der pH-Wert der Zusammensetzung 2,5 bis 6,5, vorzugsweise 2,5 bis 5,5, beträgt.

2. Emulgierte Öl-in-Wasser-Nahrungsmittelzusammensetzung nach Anspruch 1, wobei das Aquafaba in einer Menge von 0,53 bis 1,2 Gew.-%, vorzugsweise in einer Menge von 0,58 bis 1,1 Gew.-%, noch bevorzugter von 0,65 bis 1,0 Gew.-%, berechnet als Proteingehalt im Aquafaba, bezogen auf das Gewicht der Nahrungsmittelzusammensetzung, vorliegt.

3. Emulgierte Öl-in-Wasser-Nahrungsmittelzusammensetzung nach irgendeinem der vorhergehenden Ansprüche, wobei das Aquafaba aus der Gruppe ausgewählt ist, bestehend aus Aquafaba aus Kichererbsen, Aquafaba aus weißen Bohnen, Aquafaba aus Erbsen, Aquafaba aus Linsen, Aquafaba aus Sojabohnen, Aquafaba aus Kidneybohnen, Aquafaba aus schwarzen Bohnen oder einer Mischung davon, wobei das Aquafaba vorzugsweise aus der Gruppe ausgewählt ist, die aus Aquafaba aus Kichererbsen und Aquafaba aus weißen Bohnen besteht.

4. Emulgierte Öl-in-Wasser-Nahrungsmittelzusammensetzung nach irgendeinem der vorhergehenden Ansprüche, wobei das Gewichtsverhältnis von Aquafaba, berechnet als Gewicht seines Proteins, zu Pflanzenöl zwischen 1:55 und 1:155, vorzugsweise zwischen 1:68 und 1:125 liegt.

5. Emulgierte Öl-in-Wasser-Nahrungsmittelzusammensetzung nach irgendeinem der vorhergehenden Ansprüche, wobei die Konzentration von Stärke aus Kartoffeln, Mais, Reis, Tapioka oder Erbsen weniger als 3 Gew.-%, vorzugsweise weniger als 1 Gew.-%, beträgt, vorzugsweise fehlt.

6. Emulgierte Öl-in-Wasser-Nahrungsmittelzusammensetzung nach irgendeinem der vorhergehenden Ansprüche, wobei die durchschnittliche Öltröpfchengröße D3,3 unter 10 Mikrometern, vorzugsweise zwischen 1 und 10 Mikrometern liegt.

7. Emulgierte Öl-in-Wasser-Nahrungsmittelzusammensetzung nach irgendeinem der vorhergehenden Ansprüche, wobei die Zusammensetzung Mayonnaise, eine mayonnaiseähnliche Sauce oder ein Salatdressing oder eine Dip-Sauce ist.

8. Verfahren zur Herstellung einer emulgierten Öl-in-Wasser-Nahrungsmittelzusammensetzung, wobei das Verfahren die Schritte umfasst:

   a. Bereitstellen einer Mischung, die Wasser und 0,53 bis 1,3 Gew.-% Aquafaba, berechnet als Gewicht seines Hülsenfrüchteproteins, bezogen auf das Gewicht der resultierenden Nahrungsmittelzusammensetzung, umfasst,
   b. Kombinieren der aus Schritt a) resultierenden Mischung mit 66 bis 82 Gew.-% Pflanzenöl, bezogen auf das Gewicht der resultierenden Nahrungsmittelzusammensetzung,
   c. Homogenisieren der aus Schritt b) resultierenden Kombination, um eine emulgierte Öl-in-Wasser-Emulsion mit einem pH-Wert von 2,5 bis 6,5 zu erhalten, wobei das Gewichtsverhältnis von Aquafaba, berechnet als dessen Proteingehalt, zu Pflanzenöl in der resultierenden Nahrungsmittelzusammensetzung höchstens 1:51 beträgt.

9. Verfahren nach Anspruch 8, wobei das Aquafaba als Pulver zugegeben wird und das Pulver einen Proteingehalt von 15 bis 25 Gew.-%, bezogen auf das Gewicht des Pulvers, aufweist.

**10.** Verfahren nach Anspruch 8 oder 9, wobei die aus Schritt a) resultierende Mischung Aquafaba in einer Menge von 2,2 bis 17,5 Gew.-%, vorzugsweise von 2,5 bis 7 Gew.-%, noch bevorzugter von 3 bis 7 Gew.-%, berechnet als dessen Proteingewicht, bezogen auf das Gewicht der aus Schritt a) resultierenden Mischung, umfasst.

**11.** Verfahren nach irgendeinem der Ansprüche 8 bis 10, wobei das Gewichtsverhältnis von Aquafaba, berechnet als dessen Proteingehalt, zu Pflanzenöl in der resultierenden Zusammensetzung 1:55 bis 1:155, vorzugsweise 1:68 bis 1:125 Gew.-%, beträgt.

**12.** Verfahren nach irgendeinem der Ansprüche 8 bis 11, wobei das Verfahren ferner umfasst den Schritt des Bereitstellens von Aquafaba, der vor dem Schritt a) durchgeführt wird, wobei der Schritt das Erhitzen von Samen von Fabaceae in Wasser auf eine Temperatur zwischen 60 und 160°C und das Entfernen der Samen aus dem resultierenden Aquafaba und das Konzentrieren oder Trocknen des Aquafaba umfasst, wobei das resultierende Aquafaba einen Proteingehalt von 2,2 bis 25 Gew.-%, bezogen auf das Trockengewicht, aufweist.

**13.** Verfahren nach irgendeinem der Ansprüche 8 bis 12, wobei das Homogenisieren im Schritt c) durchgeführt wird, um eine durchschnittliche Partikelgröße D3,3 von unter 10 Mikrometern, vorzugsweise zwischen 1 und 10 Mikrometern, zu erhalten.

**14.** Verwendung von 0,53 bis 1,3 Gew.-% Aquafaba-Pulver (Gewicht berechnet als dessen Proteingewicht), bezogen auf das Gewicht der Zusammensetzung, wobei die Zusammensetzung eine emulgierte Öl-in-Wasser-Nahrungsmittelzusammensetzung ist, umfassend:

• 66 bis 82 Gew.-% Pflanzenöl,
• Wasser,
wobei das Gewichtsverhältnis von Aquafaba, berechnet als dessen Proteingehalt, zu Pflanzenöl höchstens 1:51 beträgt,
wobei die Zusammensetzung einen pH-Wert von 2,5 bis 6,5, vorzugsweise von 2,5 bis 5,5, aufweist,
um der Nahrungsmittelzusammensetzung Gefrier-Auftau-Stabilität zu verleihen.

## Revendications

**1.** Composition alimentaire émulsifiée huile dans l'eau comprenant :

• 66 à 82 % en poids d'huile végétale,
• 0,53 à 1,3 % en poids d'aquafaba, calculés sous la forme de son poids de protéines de légumineuse, par rapport au poids de la composition alimentaire,
dans laquelle le rapport en poids de l'aquafaba, calculé sous la forme de sa teneur en protéines, à l'huile végétale, est d'au plus 1/51,
• de l'eau,
dans laquelle le pH de la composition est de 2,5 à 6,5, de préférence de 2,5 à 5,5.

**2.** Composition alimentaire émulsifiée huile dans l'eau selon la revendication 1, dans laquelle l'aquafaba est présent en une quantité de 0,53 à 1,2 % en poids, de préférence en une quantité de 0,58 à 1,1 % en poids, mieux encore de 0,65 à 1,0 % en poids, calculée sous la forme de la teneur en protéines de l'aquafaba, par rapport au poids de la composition alimentaire.

**3.** Composition alimentaire émulsifiée huile dans l'eau selon l'une quelconque des revendications précédentes, dans laquelle l'aquafaba est choisi dans le groupe constitué par l'aquafaba de pois chiche, l'aquafaba de haricot blanc, l'aquafaba de pois, l'aquafaba de lentille, l'aquafaba de soja, l'aquafaba de haricot sec, l'aquafaba de haricot noir et leurs mélanges, de préférence dans laquelle l'aquafaba est choisi dans le groupe constitué par l'aquafaba de pois chiche et l'aquafaba de haricot blanc.

**4.** Composition alimentaire émulsifiée huile dans l'eau selon l'une quelconque des revendications précédentes, dans laquelle le rapport en poids de l'aquafaba, calculé sous la forme de son poids de protéines, à l'huile végétale, va de 1/55 à 1/155, de préférence de 1/68 à 1/125.

**5.** Composition alimentaire émulsifiée huile dans l'eau selon l'une quelconque des revendications précédentes, dans laquelle la concentration d'amidon de pomme de terre, de maïs, de riz, de tapioca ou de pois est inférieure à 3 % en poids, de préférence inférieure à 1 % en poids, de préférence est nulle.

6. Composition alimentaire émulsifiée huile dans l'eau selon l'une quelconque des revendications précédentes, dans laquelle la taille moyenne des gouttelettes d'huile, D3,3, est inférieure à 10 micromètres, de préférence comprise entre 1 et 10 micromètres.

7. Composition alimentaire émulsifiée huile dans l'eau selon l'une quelconque des revendications précédentes, laquelle composition est une mayonnaise, une sauce de type mayonnaise, ou une sauce pour salade ou une sauce pour trempette.

8. Procédé pour préparer une composition alimentaire émulsifiée huile dans l'eau, lequel procédé comprend les étapes de :

a. obtention d'un mélange comprenant de l'eau, et 0,53 à 1,3 % en poids d'aquafaba, calculés sous la forme de son poids de protéines de légumineuse, par rapport au poids de la composition alimentaire résultante,
b. combinaison du mélange obtenu dans l'étape a) avec 66 à 82 % en poids d'huile végétale, par rapport au poids de la composition alimentaire résultante,
c. homogénéisation de la combinaison résultant de l'étape b) pour que soit obtenue une émulsion huile dans l'eau émulsifiée ayant un pH de 2,5 à 6,5,

dans lequel le rapport en poids de l'aquafaba, calculé sous la forme de sa teneur en protéines, à l'huile végétale, est d'au plus 1/51, dans la composition alimentaire résultante.

9. Procédé selon la revendication 8, dans lequel l'aquafaba est ajouté sous forme de poudre, et la poudre a une teneur en protéines de 15 à 25 % en poids par rapport au poids de la poudre.

10. Procédé selon la revendication 8 ou 9, dans lequel le mélange résultant de l'étape a) comprend de l'aquafaba en une quantité de 2,2 à 17,5 % en poids, de préférence de 2,5 à 7 % en poids, mieux encore de 3 à 7 % en poids, calculée sous la forme de son poids de protéines, par rapport au poids du mélange résultant de l'étape a).

11. Procédé selon l'une quelconque des revendications 8 à 10, dans lequel le rapport en poids de l'aquafaba, calculé sous la forme de son poids de protéines, à l'huile végétale dans la composition ainsi obtenue, va de 1/55 à 1/155, de préférence de 1/68 à 1/125 % en poids.

12. Procédé selon l'une quelconque des revendications 8 à 11, lequel procédé comprend en outre l'étape d'obtention d'aquafaba, réalisée avant l'étape a), l'étape comprenant le chauffage de graines de *Fabaceae* dans de l'eau à une température comprise entre 60 et 160°C, et le retrait des graines hors de l'aquafaba ainsi obtenu, et la concentration ou le séchage de l'aquafaba, dans lequel l'aquafaba ainsi obtenu a une teneur en protéines de 2,2 à 25 % en poids sur la base du poids sec.

13. Procédé selon l'une quelconque des revendications 8 à 12, dans lequel l'homogénéisation dans l'étape c) est réalisée pour que soit obtenue une granulométrie moyenne D3,3 inférieure à 10 micromètres, de préférence comprise entre 1 et 10 micromètres.

14. Utilisation de 0,53 à 1,3 % en poids de poudre d'aquafaba (en poids, calculés sous la forme de son poids de protéines), par rapport au poids de la composition, dans laquelle la composition est une composition alimentaire émulsifiée huile dans l'eau comprenant :

• 66 à 82 % en poids d'huile végétale,
• de l'eau,
dans laquelle le rapport en poids de l'aquafaba, calculé sous la forme de sa teneur en protéines, à l'huile végétale, est d'au plus 1/51,
et dans laquelle la composition a un pH de 2,5 à 6,5, de préférence de 2,5 à 5,5, pour que soit obtenue une stabilité à la congélation-décongélation de la composition alimentaire.

FIG .1

3.7cm

3.7cm

76 holes ($\tilde{}$3mm$^2$)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2022049160 A1
- US 2021059284 A1

- EP 3788885 A

### Non-patent literature cited in the description

- **HE et al.** Aquafaba, a new plant-based rheological additive for food applications. *Trends in Food Science & Technology*, 2021, vol. 111, 27-42
- **S. GHOSH** ; **J. N. COUPLAND**. Factors affecting the freeze-thaw stability of concentrated emulsions. *Food Hydrocolloids*, 2008, vol. 22, 105-111

- **B.M. DEGNER et al.** Factors Influencing the Freeze-Thaw Stability of Emulsion-Based Foods. *Comprehensive Reviews in Food Science and Food Safety*, 2014, vol. 13, 98-113
- **M. ALDERLIESTEN**. *Particle & Particle Systems Characterization*, 1991, vol. 8, 237-241
- **GOUDAPPEL et al.** *Journal of Colloid and Interface Science*, 2001, vol. 239, 535-542